# EUROPEAN PATENT APPLICATION

(11) **EP 1 950 664 A1**
(43) Date of publication of application: **30.07.2008**
(21) Application number: 06822988.9
(22) Date of filing: 06.11.2006
(51) Int. Cl.: G06F 13/00, H04M 1/247, H04Q 7/38

(54) **MOBILE TERMINAL DEVICE, URL MANAGEMENT METHOD USED FOR THE SAME, AND PROGRAM THEREOF**

(30) Priority: 16.11.2005 JP 2005330950
(71) Applicant: NEC Corporation, Minato-ku Tokyo 108-8001 (JP)
(72) Inventor: ARIYOSHI, Hironobu, NEC Corporation, Tokyo 1088001 (JP)
(74) Representative: Glawe, Delfs, Moll
(86) International application number: PCT/JP2006/322074
(87) International publication number: WO 2007/058084

(57) **Abstract**

A portable terminal allows a bookmark to be shared among a plurality of browsers without using a dedicated managing program. A mobile telephone 1 includes irreplaceable browsers (A) 12 and (B) 13, browser A bookmark folder memory 16 used by the browser (A) 12, and browser B bookmark folder memory 18 used by the browser (B) 13. In addition, the mobile telephone 1 includes shared bookmark folder memory 17 commonly available by the browser (A) 12 and the browser (B) 13, and is provided with a CPU 11 for registering a bookmark in a shared bookmark folder from each of the browser (A) 12 and the browser (B) 13, displaying a Web page on which the registered bookmark is referenced, editing the registered bookmark, and deleting the registered bookmark.

## Description

### Technical Field

The present invention relates to a portable terminal, and a URL managing method and a program for the terminal, and more specifically to a URL (uniform resource locator) managing method for each of plural pieces of browser software installed on a portable terminal such as a mobile telephone.

### Background Art

In a portable terminal such as a mobile telephone, the mobile telephone can include a plurality of browsers in cases where separate browsers are provided for each different communication bearer including a mobile telephone, wireless LAN (local area network), and other bearers, or where a browser is tailored to a site when there is a condition for displaying the site.

In this case, since each of the plurality of browsers includes a bookmark folder for holding a uniquely predetermined URL (generally, the combination of the predetermined URL and the name of a site specified by the URL is referred to as a bookmark etc.) (for example, refer to the Patent Document 1), a bookmark cannot be communicated between a plurality of browsers, and a user has to communicate a URL by copying or making a memo of the URL, which burdens the user.

When a plurality of browsers are provided on a mobile telephone, each browser includes an independent bookmark folder, and a URL registered in a bookmark folder by each browser cannot be referred to by another browser. Therefore, when a URL on the same Web page is to be registered, each browser has to register an identical URL in the bookmark folder.

For example, actual registration of an URL is made by first displaying a site to be registered in the first browser and making a registration in a bookmark folder, and then making a memo of the displayed URL or recording it using a copy function. On the second and subsequent browsers, the registration in the bookmark folder of the browser is accomplished by typing the URL in the memo using the URL input function (which allows input of any URL and displays a Web page) or pasting it by a paste function to display a necessary Web page.

Therefore, when the same URL is to be registered in the bookmark folders in a plurality of browsers, it is necessary to display target sites separately on the respective browsers and thereafter register the URL in the bookmark folders, which is tedious and inconvenient for the user.

To alleviate the burden on the user, a method has been proposed in which, for sharing a URL among a plurality of browsers, a shared bookmark file is provided and when a URL stored in a predetermined format in the shared bookmark file is to be used, the URL read from the shared bookmark file is converted into a format corresponding to the plurality of browsers (for example, refer to the Patent Document 2).
Patent Document 1: Japanese Patent Publication No. 2002-312273
Patent Document 2: Japanese Patent Publication No. H11-259496

### Disclosure of the Invention

### Description of the Related Art

In the above-mentioned conventional URL managing method, when the same URL is to be registered in the bookmark folders in a plurality of browsers, it is necessary to display target sites separately on the respective browsers and thereafter register the URL in the bookmark folders, which is tedious and inconvenient for the user.

Generally, a mobile telephone includes a built-in browser, and a user cannot replace a plurality of browsers for use as in a personal computer. Therefore, when an integrated bookmark management program is used in converting a URL read from a shared bookmark file into a format corresponding to each of the plurality of browsers as in the method described in the Patent Document 2 above, it is necessary to incorporate the integrated bookmark management program into the mobile telephone.

In the mobile telephone, since there is a restriction on the size of a housing, and it is difficult to provide a large storage capacity for the built-in memory. Therefore, the integrated bookmark management program reduces the storage capacity of the built-in memory.

An object of the present invention is to solve the above-mentioned problems, and provide a portable terminal, and a URL managing method and a program for the terminal capable of sharing a bookmark among a plurality of browsers without using a dedicated management program.

The portable terminal according to the present invention includes a plurality of irreplaceable built-in browser functions that allow a URL (uniform resource locator) of a Web page to be registered, and stores the URL in a plurality of storage means corresponding to each of the plurality of browser functions. The terminal includes shared URL storage means for storing a URL shared among the plurality of browser functions.

### Summary of the Invention

The URL managing method according to the present invention is used for a portable terminal including a plurality of irreplaceable built-in browser functions that allow a URL (uniform resource locator) of a Web page to be registered, and storing the URL in a plurality of storage means corresponding to each of the plurality of browser functions. The portable terminal performs a process of storing in shared URL storage means the URL shared by the portable terminal among the plurality of browser functions.

The program of the URL managing method according to the present invention is used for a portable terminal including a plurality of irreplaceable built-in browser functions that allow a URL (uniform resource locator) of a Web page to be registered, and storing the URL in a plurality of storage means corresponding to each of the plurality of browser functions. The program directs a computer of the portable terminal to perform a process of storing in shared URL storage means the URL shared among the plurality of browser functions.

That is, the portable terminal according to the present invention includes two or more built-in browser functions, and includes a shared bookmark folder to be shared by each browsers, thereby allowing two or more browsers to handle the same bookmark, and alleviating the burden on a user.

A bookmark function refers to the function of registering a URL (uniform resource locator) of a Web page frequently browsed, and the address of a Web page can be specified in a simple operation. A bookmark folder refers to a folder for storing a bookmark.

Specifically, the portable terminal according to the present invention includes common bookmark storage means available and shared by browsers A and B in addition to bookmark folder storage means A used by a browser A and bookmark folder storage means B used by a browser B, and means for registering a bookmark in a shared bookmark folder by each of the browsers A and B, displaying a Web page with reference to the registered bookmark, editing the registered bookmark, deleting the registered bookmark, moving a bookmark from a shared bookmark folder to a separate bookmark folder, and inversely moving the bookmark from the separate bookmark folder to the shared bookmark folder.

Thus, the portable terminal according to the present invention includes a shared bookmark folder accessible by a plurality of browsers A and B to allow sharing of a bookmark between the browsers A and B when each of the browsers A and B makes registration in the shared bookmark folder. Therefore, it is not necessary to register the same bookmark in each of the browsers A and B.

In the portable terminal according to the present invention, all browsers A and B can simply use a bookmark by moving the bookmark registered in the separate bookmark folder to a shared bookmark folder. Inversely, the portable terminal according to the present invention can also allow a bookmark to be used only by the browsers A and B by moving the bookmark from the shared bookmark folder to the separate bookmark folder.

Furthermore, the portable terminal according to the present invention can delete a bookmark in all browsers A and B by deleting the bookmark in the shared bookmark folder. In addition, the portable terminal according to the present invention can improve the memory use rate by including a shared bookmark folder because it is not necessary for the browsers A and B to register the same bookmark.

With the above-mentioned configuration and operation, the present invention acquires an effect of sharing a bookmark among a plurality of browsers without using a dedicated management program.

### Best Mode for Carrying Out the Invention

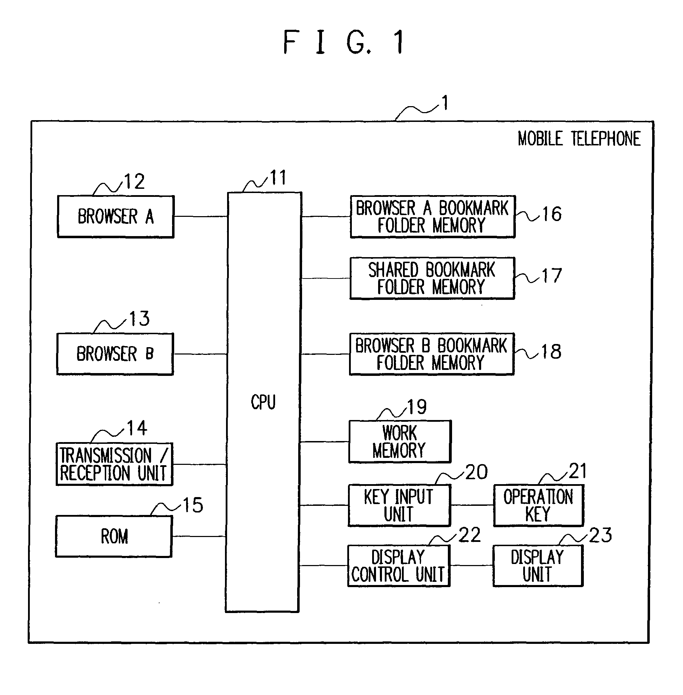

The exemplary embodiments of the present invention are described below with reference to the drawings. Figure 1 is a block diagram of the configuration of the mobile telephone according to an exemplary embodiment of the present invention. In Figure 1, a mobile telephone 1 is configured by a CPU (central processing unit) 11, a browser (A) 12, a browser (B) 13, a transmission/reception unit 14, ROM (read only memory) 15, browser A bookmark folder memory 16, shared bookmark folder memory 17, browser B bookmark folder memory 18, work memory 19, a key input unit 20, an operation key 21, a display control unit 22, and a display unit 23.

The CPU 11 is connected to each component in the mobile telephone 1, and the ROM 15 stores fixed data such as a dictionary used in various control programs, a Japanese character conversion, etc. to be executed by the CPU 11. The work memory 19 is configured by RAM (random access memory), and stores data temporarily required by the CPU 11 executing a program. The screen data for display of a browser is also stored in a predetermined area of the work memory 19.

The key input unit 20 is an input circuit for receiving a key input from the operation key 21. The display control unit 22 is a control circuit for controlling the display on the display unit 23. The display unit 23 is arranged on the front of the body of the device not shown in the attached drawings, and is a display device such as a monochrome or color liquid crystal panel or organic EL (electro luminescence) etc. The transmission/reception unit 14 is a circuit for transmitting and receiving data such as browser data and voice data by wireless.

The browser (A) 12 and the browser (B) 13 are application software for browsing a Web page, download an HTML (hypertext markup language) file, an image file, a music file, etc., analyze a layout, and display and reproduce the files. In the present embodiment, the browser (A) 12 and the browser (B) 13 are incorporated into the body of the mobile telephone 1, and cannot be replaced.

The browser A bookmark folder memory 16 and the browser B bookmark folder memory 18 are memory for storing a bookmark to be uniquely used for each of the browser (A) 12 and the browser (B) 13, and the shared bookmark folder memory 17 is memory for storing a bookmark to be shared by the browser (A) 12 and the browser (B) 13, and are configured by non-volatile memory.

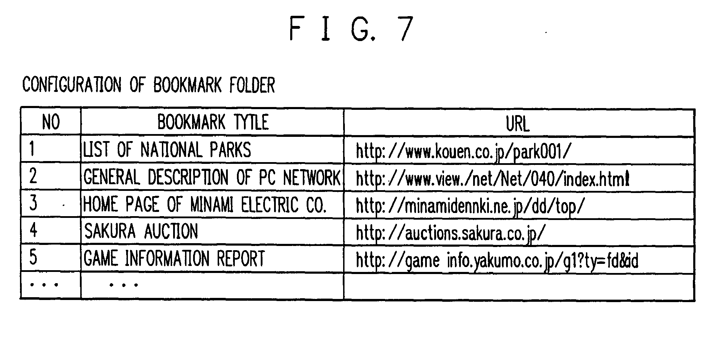

Figure 7 shows an example of the contents of a plurality of bookmarks registered in the bookmark folder according to an exemplary embodiment of the present invention. In Figure 7, a bookmark folder is a mechanism for collectively managing bookmarks, and a bookmark is configured by a bookmark title (character string) and the URL (uniform resource locator) of a Web page. A separate bookmark folder and a shared bookmark folder have the same configuration.

The mobile telephone 1 according to an exemplary embodiment of the present invention is configured as described above, but the systems of the browser (A) 12 and the browser (B) 13 shown in Figure 1 are well known by those skilled in the art, and do not directly relate to the present invention. Therefore, the detailed configuration of them is omitted here. In addition, according to the present embodiment, two browsers are incorporated into the mobile telephone 1, but more than two browsers can be incorporated.

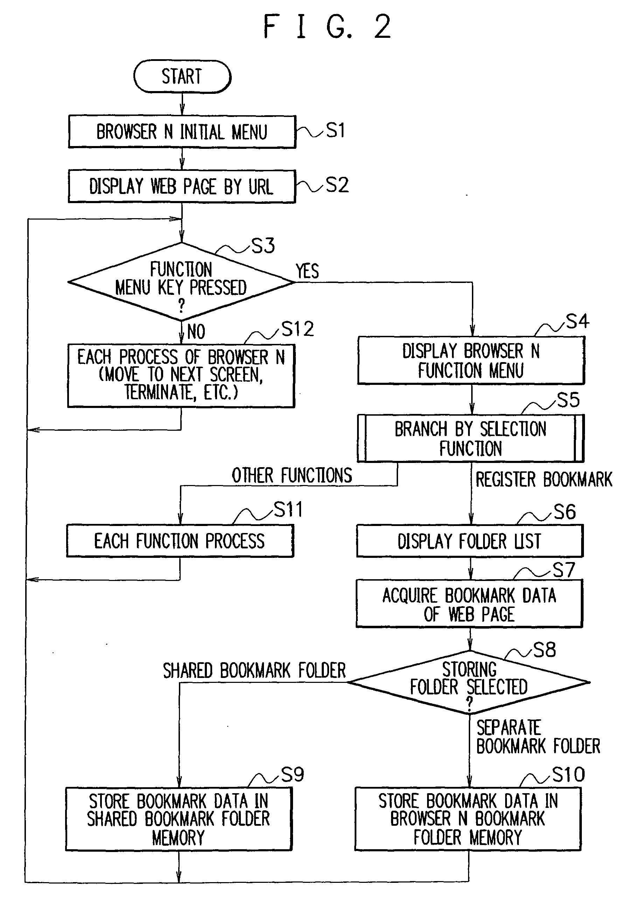

Figure 2 is a flowchart of the bookmark registering process while a browser is browsing a bookmark to be used in an exemplary embodiment of the present invention. With reference to Figures 1 and 2, the bookmark registering process while a browser is browsing a bookmark to be used in an exemplary embodiment of the present invention is described below. In the following description, it is assumed that n (n is an integer of 2 or higher) browsers are incorporated into the mobile telephone 1.

In the mobile telephone 1, when the browser n is browsing a Web page (steps S1 and S2 in Figure 2), the Web page being browsed is registered as a bookmark, and the operation of the operation key 21 is performed to activate the browser function menu (S3 in Figure 2), the CPU 11 displays the browser n function menu on the display unit 23 (step S4 in Figure 2).

When the "bookmark registration" is selected by the function selection (step S5 in Figure 2), the CPU 11 displays a bookmark folder list on the display unit 23 (step S6 in Figure 2). At this time, the CPU 11 acquires the bookmark data (bookmark title and URL) of the Web page being currently displayed (step S7 in Figure 2).

When a shared bookmark folder is selected as a bookmark folder for storing a bookmark from the displayed folder list (step S8 in Figure 2), the CPU 11 stores bookmark data in the shared bookmark folder memory 17 (step S9 in Figure 2). In addition, when a separate bookmark folder is selected (step S8 in Figure 2), the CPU 11 stores the bookmark data in a browser n bookmark folder memory (step S10 in Figure 2).

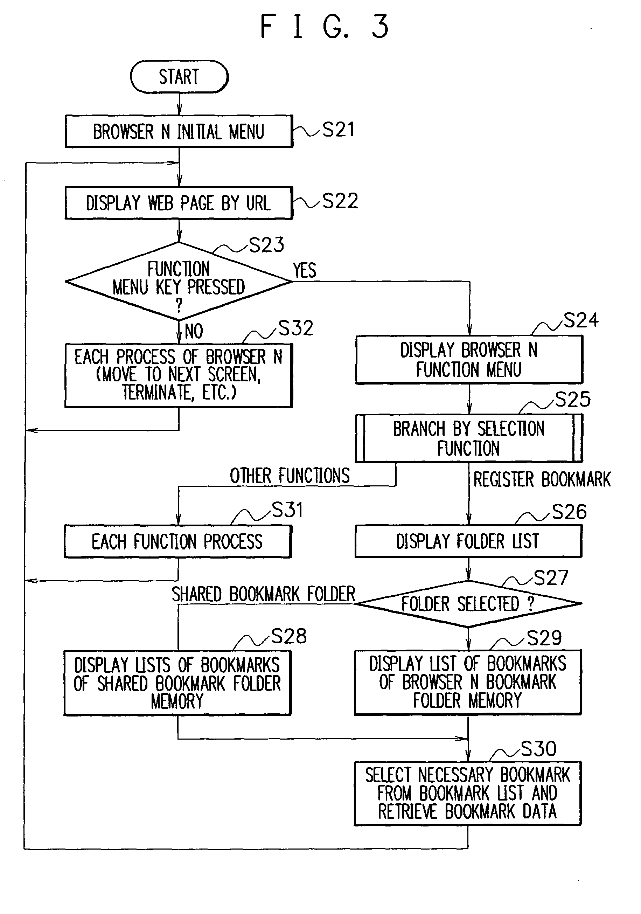

Figure 3 is a flowchart of the process performed when a Web page is displayed by specifying a bookmark registered during browsing a bookmark used in an exemplary embodiment of the present invention. Described below with reference to Figures 1 and 3 is the process performed when a Web page is displayed by specifying a bookmark registered during browsing a bookmark used in an exemplary embodiment of the present invention. In the following description, it is assumed that n (n is an integer of 2 or higher) browsers are incorporated into the mobile telephone 1.

In the mobile telephone 1, when the browser n is browsing a Web page (steps S21 and S22 in Figure 3), the Web page being browsed is registered as a bookmark, and the operation of the operation key 21 is performed to activate the browser function menu (S23 in Figure 3), the CPU 11 displays the browser n function menu on the display unit 23 (step S24 in Figure 3).

When the "bookmark registration" is selected by the function selection (step S25 in Figure 3), the CPU 11 displays a bookmark folder list on the display unit 23 (step S26 in Figure 3). When the folder storing a target bookmark is selected (step S27 in Figure 3), the CPU 11 displays a list of the bookmarks in the folder on the display unit 23.

At this time, when the shared bookmark folder is selected, the CPU 11 retrieves the bookmark stored in the shared bookmark folder memory 17 and displays it on the display unit 23 (step 28 in Figure 3). In addition, when the bookmark folder dedicated for the browser n is selected, the CPU 11 retrieves the bookmark stored in the browser n bookmark folder memory and displays a list of it on the display unit 23 (step S29 in Figure 3).

When a target bookmark is selected from the bookmark list, the CPU 11 retrieves the bookmark data (step S30 in Figure 3), and displays the Web page of the bookmark data on the display unit 23 (step S22 in Figure 3).

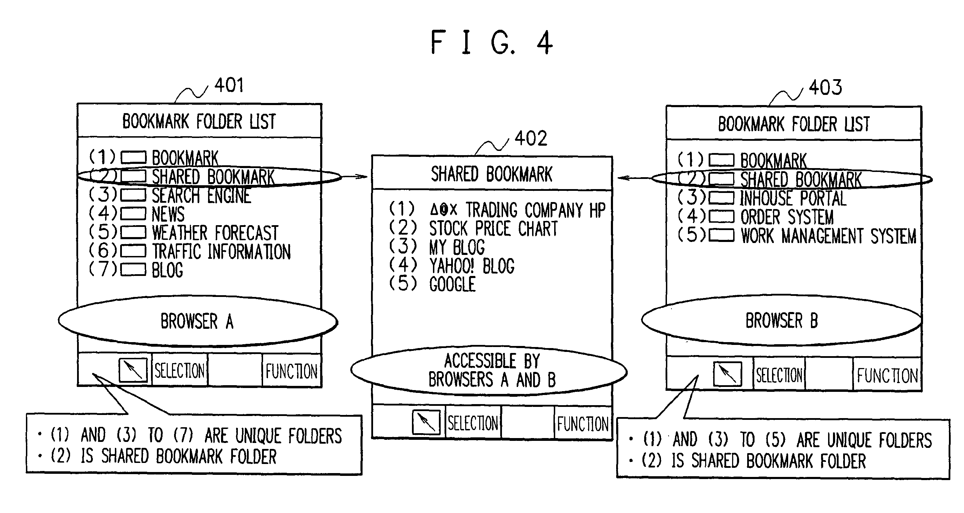

Figure 4 shows the display screen when a shared bookmark folder is selected from the bookmark folder of each browser used in an exemplary embodiment of the present invention. In Figure 4, a shared bookmark folder 402 is displayed when a "(2) shared bookmark" is selected from a browser (A) 401 or a browser (B) 403.

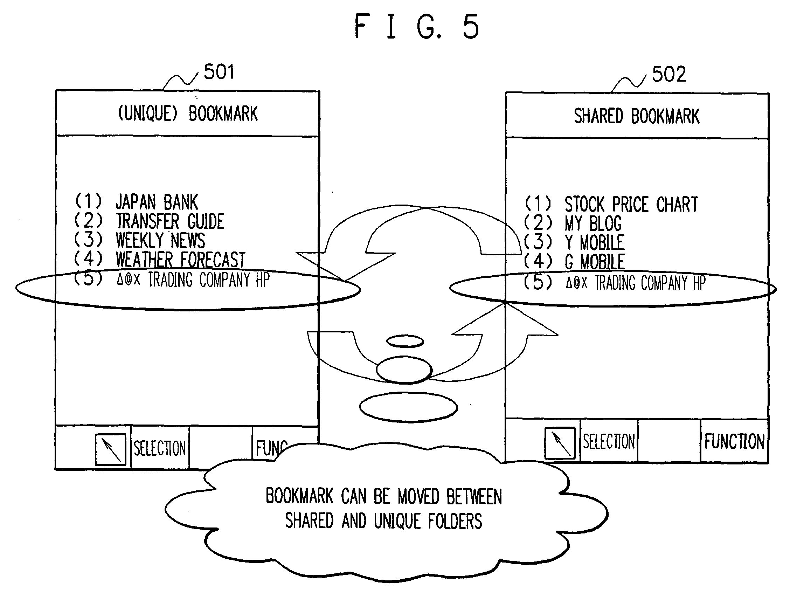

Figure 5 shows the display screen about moving a bookmark between the bookmark folders according to an exemplary embodiment of the present invention. In Figure 5, the bookmark stored in the separate bookmark folder can be accessed only by a unique browser. However, if a bookmark is moved from a separate bookmark folder 501 to a shared bookmark folder, it is accessible by all browsers.

Inversely, if the bookmark is moved from a shared bookmark folder 502 to a separate bookmark folder, the bookmark that has been accessible up to now by all browsers can be accessed by only a unique browser.

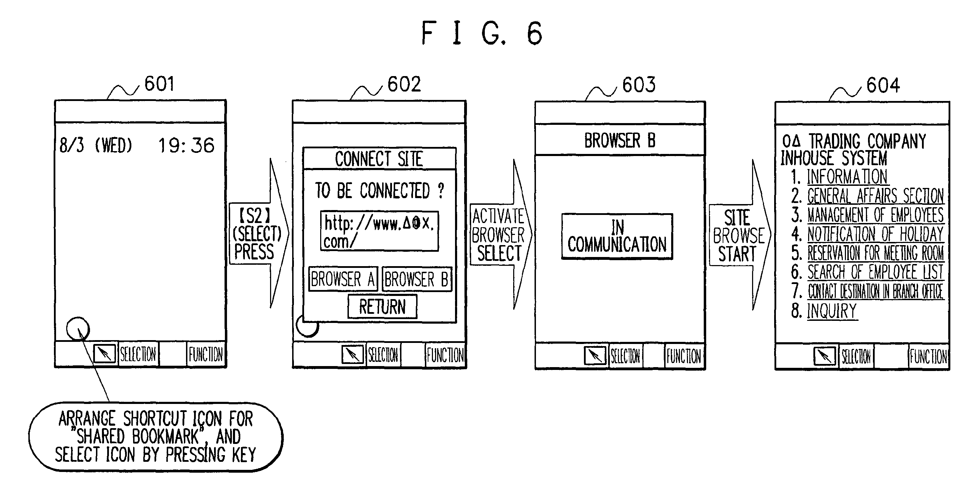

Figure 6 shows an example of registering a bookmark in a shared bookmark folder as a shortcut icon on the desktop screen according to an exemplary embodiment of the present invention. In Figure 6, when a bookmark stored in the separate bookmark folder is registered as a shortcut icon (601 in Figure 6) on the desktop (display screen of the display unit 23), and the icon is selected, the unique browser is activated and displays a Web page.

However, when a bookmark in the shared bookmark folder is registered on the desktop (display screen of the display unit 23), no browser is specified. Therefore, all implemented browsers are displayed, a user instructs to make a selection from all browsers (602 in Figure 6), and the Web page is displayed using the selected browser (604 in Figure 6).

In the present embodiment, the browser (A) 12 and the browser (B) 13 are provided, but three or more browsers can be included to access a shared bookmark folder from each of the browsers. In the present embodiment, there is one shared bookmark folder, but a plurality of shared bookmark folder can be prepared.

Thus, according to the present embodiment, when there is a shared bookmark folder commonly accessible from a plurality of browsers, a bookmark can be shared among the browsers when each browser makes registration in the shared bookmark folder, and it is not necessary to register the same bookmark in each of the browsers A and B.

According to the present invention, all browsers can simply use a bookmark by moving the bookmark registered in the separate bookmark folder to a shared bookmark folder. Inversely, according to the present embodiment, a bookmark is allowed to be used only in the browser by moving from the shared bookmark folder to the separate bookmark folder.

Furthermore, according to the present invention, deleting a bookmark in the shared bookmark folder will delete the bookmark from all browsers. In addition, the portable terminal according to the present invention can improve the memory use rate by including a shared bookmark folder because it is not necessary for the browsers to register the same bookmark.

The shared bookmark folder allows registering and editing not only while the browser is running but also on a browser initial menu, by a user data editing program, or the like. In addition to saving a bookmark in the shared bookmark folder 17, the bookmark stored in the shared bookmark folder can also be exported to an externally connected device, and a bookmark data generated in an external device can be imported to the shared bookmark folder.

### Industrial Applicability

The invention can be applied to a device capable of displaying a Web site using a plurality of browsers irreplaceable in a device of a mobile telephone, a PHS (personal handy-phone system), etc.

### Brief Description of the Drawings

Figure 1 is a block diagram of the configuration of the mobile telephone according to an exemplary embodiment of the present invention;
Figure 2 is a flowchart of a bookmark registering process while browsing a bookmark by a browser used in an exemplary embodiment of the present invention;
Figure 3 is a flowchart of the process performed when a Web page is displayed by specifying a bookmark registered during browsing a bookmark by a browser used in an exemplary embodiment of the present invention;
Figure 4 shows the display screen when a shared bookmark folder is selected from the bookmark folder of each browser used in an exemplary embodiment of the present invention;
Figure 5 shows the display screen about moving a bookmark between the bookmark folders according to an exemplary embodiment of the present invention;
Figure 6 shows an example of registering a bookmark in a shared bookmark folder as a shortcut icon on the desktop screen according to an exemplary embodiment of the present invention; and
Figure 7 shows an example of the contents of a plurality of bookmarks registered in a bookmark folder according to an exemplary embodiment of the present invention.

### Description of Symbols

- 1: mobile telephone
- 11: CPU
- 12: browser (A)
- 13: browser (B)
- 14: transmission/reception unit
- 15: ROM
- 16: browser A bookmark folder memory
- 17: shared bookmark folder memory
- 18: browser B bookmark folder memory
- 19: work memory
- 20: key input unit
- 21: operation key
- 22: display control unit
- 23: display unit

## Claims

1. A portable terminal comprising a plurality of irreplaceable built-in browser functions that allow a URL (uniform resource locator) of a Web page to be registered, and storing the URL in a plurality of storage means corresponding to each of the plurality of browser functions, **characterized by** comprising
shared URL storage means for storing the URL shared among the plurality of browser functions.

2. The portable terminal according to claim 1, **characterized in that**
in the shared URL storage means, the same URL can be freely registered, edited, deleted, and referenced from each of the plurality of browser functions.

3. The portable terminal according to claim 1 or 2, **characterized by** further comprising
display means for displaying the Web page, wherein
a graphic allowing read and display of contents of the shared URL storage means is displayed on a display screen of the display means, and a selection screen allowing selection of any of the plurality of browser functions is displayed on the display screen when the graphic is pressed.

4. The portable terminal according to any of claims 1 to 3, **characterized in that**
the URL stored in the storage means is moved to the shared URL storage means to freely read the URL from each of the plurality of browser functions.

5. The portable terminal according to any of claims 1 to 4, **characterized in that**
the URL stored in the shared URL storage means is moved to any of the plurality of storage means to limit a read of the URL to a browser function corresponding to destination storage means.

6. A URL managing method for use with a portable terminal comprising a plurality of irreplaceable built-in browser functions that allow a URL (uniform resource locator) of a Web page to be registered, and storing the URL in a plurality of storage means corresponding to each of the plurality of browser functions, **characterized in that**
the portable terminal performs a process of storing in shared URL storage means the URL shared by the plurality of browser functions.

7. The URL managing method according to claim 6, **characterized in that**
in the shared URL storage means, the same URL can be freely registered, edited, deleted, and referenced from each of the plurality of browser functions.

8. The URL managing method according to claim 6 or 7, **characterized in that**
a graphic allowing read and display of contents of the shared URL storage means is displayed on a display screen of display means for displaying the Web page, and a selection screen allowing selection of any of the plurality of browser functions is displayed on the display screen when the graphic is pressed.

9. The URL managing method according to any one of claims 6 to 8, **characterized in that**
the URL stored in the storage means is moved to the shared URL storage means to freely read the URL from each of the plurality of browser functions.

10. The URL managing method according to any one of claims 6 to 9, **characterized in that**
the URL stored in the shared URL storage means is moved to any of the plurality of storage means to limit a read of the URL to a browser function corresponding to destination storage means.

11. A program of a URL managing method used for a portable terminal comprising a plurality of irreplaceable built-in browser functions that allow a URL (uniform resource locator) of a Web page to be registered, and storing the URL in a plurality of storage means corresponding to each of the plurality of browser functions, wherein
a computer of the portable terminal is directed to perform a process of storing in shared URL storage means the URL shared among the plurality of browser functions.
